# EUROPÄISCHE PATENTANMELDUNG

(11) **EP 2 490 044 A2**
(43) Veröffentlichungstag der Anmeldung: **22.08.2012**
(21) Anmeldenummer: 12154176.7
(22) Anmeldetag: 07.02.2012
(51) Int. Cl.: G01V 5/00, G06K 9/00

(54) **Untersuchungsvorrichtung zur Untersuchung eines als Person und/oder Behälter ausgebildeten Untersuchungsgegenstands**

(30) Priorität: 16.02.2011 DE 102011004185
(71) Anmelder: Siemens Aktiengesellschaft, 80333 München (DE)
(72) Erfinder: Delianski, Svetlozar, 10713 Berlin (DE); Pashov, Ilian, 78464 Konstanz (DE)

(57) **Zusammenfassung**

Die Erfindung betrifft eine Untersuchungsvorrichtung zur Untersuchung eines als Person und/oder Behälter ausgebildeten Untersuchungsgegenstands (12), mit einer Ermittlungseinheit (17) zur Ermittlung eines dem Untersuchungsgegenstand (12) zuordenbaren Relevanzniveaus, insbesondere Gefahrniveaus, die eine Bilderfassungseinheit (18) zur Erfassung eines Bilds (B) des Untersuchungsgegenstands (12), eine Datenbank (DB), eine automatisierte Auswerteeinheit (20), die zur automatischen Auswertung von zumindest einem Abschnitt des Bilds (B) anhand der Datenbank (DB) vorgesehen ist, eine von einem Benutzer (24) bedienbare Auswerteeinheit (28) zur visuellen Auswertung von zumindest einem Abschnitt des Bilds (B) durch den Benutzer (24) und eine Eingabeeinheit (36) aufweist, die zum Eingeben zumindest einer Auswertungseingabe (38) durch den Benutzer (24) vorgesehen ist, und mit einer Datenbankverarbeitungseinheit (40) zur Verarbeitung der Datenbank (DB).

Um eine gattungsgemäße Untersuchungsvorrichtung bereitzustellen, bei welcher eine Automatisierung in der Ermittlung des Relevanzniveaus schnell und effizient optimiert werden kann, wird vorgeschlagen, dass die Datenbankverarbeitungseinheit (40) dazu vorgesehen ist, in Verbindung mit der Ermittlung des Relevanzniveaus zumindest einen Datenbankeintrag (DB.i) anhand der Auswertungseingabe (38) zu verarbeiten.

## Beschreibung

Die Erfindung geht aus von einer Untersuchungsvorrichtung zur Untersuchung eines als Person und/oder Behälter ausgebildeten Untersuchungsgegenstands, mit einer Ermittlungseinheit zur Ermittlung eines dem Untersuchungsgegenstand zuordenbaren Relevanzniveaus, insbesondere Gefahrniveaus, die eine Bilderfassungseinheit zur Erfassung eines Bilds des Untersuchungsgegenstands, eine Datenbank, eine automatisierte Auswerteeinheit, die zur automatischen Auswertung von zumindest einem Abschnitt des Bilds anhand der Datenbank vorgesehen ist, eine von einem Benutzer bedienbare Auswerteeinheit zur visuellen Auswertung von zumindest einem Abschnitt des Bilds durch den Benutzer und eine Eingabeeinheit aufweist, die zum Eingeben zumindest einer Auswertungseingabe durch den Benutzer vorgesehen ist, und mit einer Datenbankverarbeitungseinheit zur Verarbeitung der Datenbank.

Aus der US 2007/0041613 A1 ist eine gattungsgemäße Untersuchungsvorrichtung offenbart. Diese ist zur Untersuchung von Behältern vorgesehen, die potentiell die Sicherheit gefährdende Gegenstände beinhalten, wie z.B. Waffen. Sie weist eine Bilderfassungseinheit auf, die ein Bild vom Behälterinhalt erfasst. Dieses Bild wird mittels einer Bildauswertungseinheit anhand einer Objektdatenbank zur Erkennung gefährlicher Objekte ausgewertet. Die Untersuchungsvorrichtung umfasst außerdem eine weitere Auswertungseinheit, die eine Benutzerschnittstelle in der Form einer Bedieneroberfläche aufweist, mittels der der Benutzer das aufgenommene Bild visuell auswerten kann. Zur Verarbeitung, insbesondere zur Ergänzung der Objektdatenbank wird ein im Voraus bekanntes Objekt, das einer gewissen Gefahrstufe entspricht, außerhalb des normalen Betriebs der Untersuchungsvorrichtung von der Bilderfassungseinheit erfasst. Es werden hierbei Bilder des Objektes, insbesondere in verschiedenen Ausrichtungen, aufgenommen, die als neue Datenbankeinträge für spätere Auswertungsvorgänge dienen.

Ausgehend von diesem Stand der Technik liegt der Erfindung die Aufgabe zugrunde eine gattungsgemäße Untersuchungsvorrichtung bereitzustellen, bei welcher eine Automatisierung in der Ermittlung des Relevanzniveaus schnell und effizient optimiert werden kann.

Diese Aufgabe wird dadurch gelöst, dass die Datenbankverarbeitungseinheit dazu vorgesehen ist, in Verbindung mit der Ermittlung des Relevanzniveaus zumindest einen Datenbankeintrag anhand der Auswertungseingabe zu verarbeiten. Hierdurch kann eine Benutzereingabe, die herkömmlicherweise durch den Benutzer bei der visuellen Auswertung des Bilds ohnehin eingegeben wird, vorteilhaft zu einer Optimierung einer automatischen Ermittlung des Relevanzniveaus genutzt werden.

Die Auswertungseingabe durch den Benutzer kann insbesondere auf der Grundlage einer durch die automatisierte Auswerteeinheit durchgeführten Auswertung des Bildes erfolgen. Bei dieser Auswertung versucht die automatisierte Auswertungseinheit anhand der Datenbank vorzugsweise dem Bild einen Referenzgegenstand zuzuordnen, dessen Erkennung im Untersuchungsgegenstand einem bestimmten Relevanzniveau, z.B. einer niedrigen oder hohen Gefahr entspricht. Hierzu sind in der Datenbank vorteilhafterweise Zuordnungen von Bilddaten zu solchen Referenzgegenständen, eingetragen.

Beispielweise kann die Auswertungseingabe eine Bestätigung oder ein Verwerfen einer solchen automatischen Zuordnung sein. Außerdem kann die Auswertungseingabe einem Vertrauensparameter entsprechen, welcher der automatischen Zuordnung zugeordnet wird. Die Auswertungseingabe kann ferner eine Eingabe aufgrund einer mangelnden automatischen Zuordnung sein, insbesondere über einen Referenzgegenstand, welcher in der Datenbank nicht enthalten ist.

Die Datenbank kann lokal am Untersuchungsort gespeichert sein. Hierzu kann die Untersuchungsvorrichtung eine Speichereinheit zur Speicherung der Datenbank aufweisen, auf welche die automatisierte Auswerteeinheit und/oder die Datenbankverarbeitungseinheit unmittelbar Zugriff haben. Alternativ oder zusätzlich kann die Datenbank auf einem vom Untersuchungsort entfernten Datenbankserver gespeichert sein, auf welchen über ein Datennetzwerk zugegriffen werden kann. Hierzu kann die Untersuchungsvorrichtung vorteilhaft eine Schnittstelle aufweisen, durch welche die automatisierte Auswerteeinheit und/oder die Datenbankverarbeitungseinheit Zugriff auf die Datenbank über das Datennetzwerk haben.

Unter einer Verarbeitung, die "in Verbindung mit der Ermittlung des Relevanzniveaus" erfolgt, soll eine Verarbeitung anhand von Daten verstanden werden, welche aus der Ermittlung des Relevanzniveaus des von der Untersuchungsvorrichtung aktuell untersuchten Untersuchungsgegenstands hervorgehen, welcher vor Anfang der Untersuchung einen zumindest teilweise unbekannten, herkömmlicherweise völlig unbekannten Inhalt aufweist. Diese Daten werden unten den reellen Bedingungen eines normalen Betriebs der Untersuchungsvorrichtung gewonnen, in welchem typischerweise eine Reihe von Personen bzw. von Behältern untersucht wird. Dadurch, dass die Verarbeitung der Datenbank in Verbindung mit der Ermittlung des Relevanzniveaus erfolgt, werden vorteilhaft Auswertungseingaben berücksichtigt, die aus der Untersuchung unter reellen bzw. nicht simulierten Bedingungen hervorgehen, wodurch eine optimale Anpassung der Datenbank an diese reellen Bedingungen erreicht werden kann. Entspricht der Untersuchungsgegenstand einer zu untersuchenden Person, ist der "Inhalt" des Untersuchungsgegenstands von am Körper der Person getragenen Objekten gebildet.

In diesem Zusammenhang können die in Verbindung mit der Ermittlung des Relevanzniveaus entstehenden Auswertungseingaben für eine spätere Verarbeitung der Datenbank gesammelt bzw. gespeichert werden. Hierbei kann die Verarbeitung der Datenbank anhand der verschiedenen Auswertungseingaben, die in Bezug auf die Ermittlung der Relevanzniveaus einer Reihe verschiedener Untersuchungsgegenstände entstanden sind, nach Ende eines normalen Betriebs der Untersuchungsvorrichtung erfolgen, in welchem die Reihe untersucht wurde.

Es ist jedoch von Vorteil, wenn die Untersuchungsvorrichtung einen Untersuchungsbetrieb aufweist, in welchem eine Reihe von Untersuchungsgegenständen, die jeweils einen zumindest teilweise, herkömmlicherweise völlig unbekannten Inhalt aufweisen, untersucht werden, wobei die Verarbeitung der Datenbank während des Untersuchungsbetriebs erfolgt. Die Verarbeitung der Datenbank in Verbindung mit der Ermittlung des Relevanzniveaus eines bestimmten Untersuchungsgegenstands kann hierbei zumindest teilweise während der Ermittlung des Relevanzniveaus eines weiteren Untersuchungsgegenstands in der Reihe erfolgen. Es wird jedoch bevorzugt, dass die Datenbank weitestgehend unverzüglich nach Eingeben der Auswertungseingabe verarbeitet wird, wodurch die verarbeitete Datenbank bereits für anschließende Untersuchungen weiterer Untersuchungsgegenstände zur Verfügung stehen kann.

Unter einem "Relevanzniveau" soll insbesondere ein dem Untersuchungsgegenstand zuordenbarer Parameter verstanden werden, welcher die Relevanz des Untersuchungsgegenstands in Bezug auf eine Weiterbehandlung charakterisiert. Das Relevanzniveau entspricht, bei einer vorteilhaften Anwendung der Untersuchungsvorrichtung bei einer Sicherheitskontrolle von Reisenden oder Transportgütern, einem Gefahrniveau, mit dem definierte Sicherheitsmaßnahmen zur Behandlung des Untersuchungsgegenstands verbunden sind. Das Relevanzniveau kann alternativ oder zusätzlich mit der Detektion von Objekten oder Stoffen verbunden sein, die keine unmittelbare Gefahr darstellen, sondern unter einem gesetzlichen Verbot fallen, wie beispielweise bei der Untersuchung von Frachtcontainern durch eine Zollbehörde.

Unter einer "Verarbeitung" eines Datenbankeintrags soll insbesondere eine Änderung, eine Anpassung, ein Ersetzen und/oder ein Löschen eines bestehenden Datenbankeintrags verstanden werden. Die Verarbeitung eines Datenbankeintrags kann ferner alternativ oder zusätzlich dem Erzeugen eines neuen Datenbankeintrags anhand der Auswertungseingabe entsprechen, wie in einer vorteilhaften Weiterbildung der Erfindung vorgeschlagen. Hierdurch kann schnell und einfach die Datenbank mit einem neuen Referenzgegenstand ergänzt werden.

Um eine schnelle Auswertung des erfassten Bilds durch die automatisierte Auswerteeinheit zu erreichen, wird vorgeschlagen, dass der Datenbankeintrag Bilddaten enthält, die einem Referenzgegenstand zugeordnet sind und in zumindest einem für ein Bilderkennungsverfahren geeigneten Format gespeichert sind. Besonders vorteilhaft entspricht das Format einem Vektorformat, wodurch ein anhand dieser Bilddaten erfolgender Erkennungsvorgang unabhängig von der Orientierung von Objekten innerhalb des Bildes erfolgen kann.

In einer bevorzugten Ausführung der Erfindung wird vorgeschlagen, dass die Datenbankverarbeitungseinheit dazu vorgesehen ist, die Bilddaten des Datenbankeintrags anhand von zumindest einem Bereich des vom Benutzer ausgewerteten Bilds zu verarbeiten. Es wird dabei zweckmäßigerweise ein vom Benutzer ausgewählter Bereich des visuell ausgewerteten Bilds, das zumindest einem Abschnitt des von der Bilderfassungseinheit erfassten Bilds entspricht, bei der Verarbeitung des Datenbankeintrages berücksichtigt. Dieser Bereich kann vorteilhafterweise durch den Benutzer aufgrund einer hohen Unterscheidungskraft ausgewählt werden, wodurch der Bildbereich, der nach der Verarbeitung des Datenbankeintrags in diesem Datenbankeintrag in Form von Bilddaten hinterlegt ist, in Bildern weiterer Untersuchungsgegenstände durch die automatisierte Auswerteeinheit identifiziert werden kann.

Ferner wird vorgeschlagen, dass der Datenbankeintrag einen Vertrauensparameter enthält, welcher die Zuordnung zum Referenzgegenstand behaftet. Der Vertrauensparameter weist vorteilhafterweise die Funktion eines Qualitätsparameters auf, der die Erkennungskraft der gespeicherten Bilddaten in Bezug auf einen bestimmten Referenzgegenstand charakterisiert.

In diesem Zusammenhang ist in einer Weiterbildung der Erfindung vorgeschlagen, dass ein Schwellwert des Vertrauensparameters definiert ist, wobei der Schwellwert eine Voraussetzung für eine automatische Ermittlung des Relevanzniveaus mittels der automatisierten Auswerteeinheit darstellt. Vorzugsweise wird der Vertrauensparameter derart definiert, dass er mit zunehmender Erkennungskraft der Bilddaten steigt. Ist der Schwellwert nicht erreicht, d.h. ist der Vertrauensparameter kleiner als der Schwellwert, wird vorzugsweise das Bild alternativ oder zusätzlich zur automatisierten Auswertung mittels der vom Benutzer bedienbaren Auswerteeinheit visuell ausgewertet, da die Erkennungskraft der vorhandenen Bilddaten für eine automatische Zuordnung nicht ausreichend ist. Ist der Schwellwert erreicht, kann eine automatische Ermittlung des Relevanzniveaus durch die automatisierte Auswerteeinheit erfolgen, wobei auf eine zusätzliche Visuelle Auswertung des Bildes verzichtet werden kann.

In einer bevorzugten Weiterbildung der Erfindung wird vorgeschlagen, dass die Datenbankverarbeitungseinheit dazu vorgesehen ist, anhand der Auswertungseingabe den Vertrauensparameter zu ändern. Dadurch kann ein vorteilhafter Lernprozess der automatisierten Auswerteeinheit erreicht werden, wodurch eine Zunahme der von der automatisierten Auswerteeinheit durchgeführten Ermittlungen, die zu einer automatischen Ermittlung des Relevanzniveaus ohne zusätzliche visuelle Auswertung des Benutzers führen, erreicht werden kann.

Ferner wird ein Verfahren zur Untersuchung eines als Person und/oder Behälter ausgebildeten Untersuchungsgegenstands vorgeschlagen, bei welchem zur Ermittlung eines dem Untersuchungsgegenstand zuordenbaren Relevanzniveaus
- ein Bild des Untersuchungsgegenstands erfasst wird,
- eine automatische Auswertung von zumindest einem Abschnitt des Bilds anhand einer Datenbank erfolgt,
- eine visuelle Auswertung von zumindest einem Abschnitt des Bilds durch den Benutzer erfolgt, wobei eine Auswertungseingabe durch den Benutzer eingegeben wird,
   und bei welchem
- die Datenbank verarbeitet wird, wobei zumindest ein Datenbankeintrag anhand der Auswertungseingabe in Verbindung mit der Ermittlung des Relevanzniveaus verarbeitet wird.

Ein Ausführungsbeispiel der Erfindung ist in den Zeichnungen dargestellt und wird nachfolgend beschrieben. Es zeigen:
- Figur 1:: eine erfindungsgemäße Untersuchungsvorrichtung mit einer Bilderfassungseinheit und einer Bildauswerteeinheit sowie Zu- und Abförderern in einer Ansicht von oben,
- Figur 2:: die Bildauswerteeinheit in einer Detailansicht sowie eine Vergrößerung eines erfassten Bilds und
- Figur 3:: eine Datenbank der Bildauswerteeinheit.

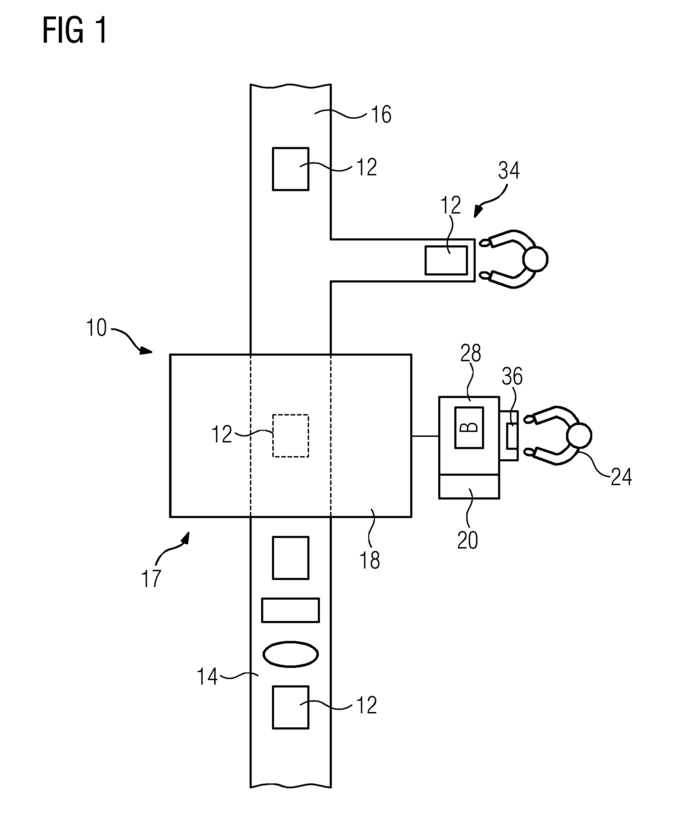

Figur 1 zeigt eine Untersuchungsvorrichtung 10 zur Untersuchung von als Gepäckstücken ausgebildeten Untersuchungsgegenständen 12 an einem Flughafen in einer stark schematisierten Ansicht von oben. Die Funktion der Untersuchungsvorrichtung 10 besteht darin, einem Untersuchungsgegenstand 12 durch die Analyse von dessen Inhalt ein Gefahrniveau zuzuordnen. Diese Untersuchung findet bekannterweise nach Abgabe des Gepäckstückes durch den Passagier beim Einchecken und vor der weiteren Förderung des Gepäckstücks zum zugeordneten Flugzeug statt. Zur Förderung der Gepäckstücke zu und von der Untersuchungsvorrichtung 10 sind ein Zuförderer 14 und ein Abförderer 16 vorgesehen. In einer alternativen Ausführung ist eine Untersuchungsvorrichtung 10 denkbar, durch welche Passagiere und/oder dessen Handgepäck an den üblichen Sicherheitskontrollen am Flughafen untersucht werden.

Es wird anhand der Figur 1 der Untersuchungsbetrieb der Untersuchungsvorrichtung 10 erläutert, in welchem Untersuchungsgegenstände 12 einer Reihe nacheinander untersucht werden. Der Inhalt der Untersuchungsgegenstände 12 ist vor dem Durchlauf durch die Untersuchungsvorrichtung 10 für ein Flughafenpersonal unbekannt oder teilweise unbekannt. Für jeden Untersuchungsgegenstand 12 wird mittels einer Ermittlungseinheit 17 das dem Untersuchungsgegenstand 12 zuordenbare Gefahrniveau ermittelt.

Zur Ermittlung des Gefahrniveaus eines Untersuchungsgegenstands 12 wird dieses zunächst mittels des Zuförderers 14 zu einer Bilderfassungseinheit 18 transportiert. Diese ist im betrachteten Ausführungsbeispiel als Röntgenscanner ausgebildet, welcher ein Röntgenbild B des Untersuchungsgegenstands 12, insbesondere von dessen Inhalt erzeugt. Weitere Ausbildungen der Bilderfassungseinheit 18, die eine Bilderfassung des Inhalts eines Untersuchungsgegenstands 12 ohne manuelle Untersuchung ermöglichen, wie z.B. als ein mit Terahertzstrahlungen arbeitender Scanner, sind ebenfalls möglich.

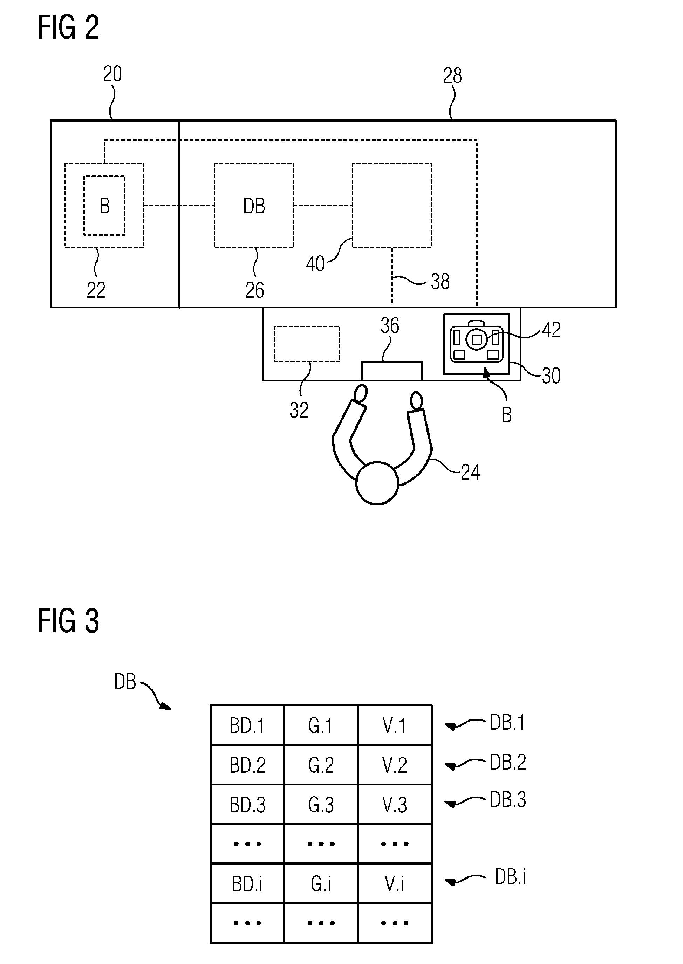

Zur Auswertung des Bildes B weist die Untersuchungsvorrichtung 10 eine erste Bildauswerteeinheit 20 auf, die zur automatischen Auswertung des Bilds B, und zwar insbesondere zur automatischen Erkennung eines Gefahrengegenstands im Untersuchungsgegenstand 12 vorgesehen ist. Hierzu steht die Bildauswerteeinheit 20, die in einer Detailansicht in Figur 2 näher dargestellt ist, in Wirkverbindung mit der Bilderfassungseinheit 18. Die Bildauswerteeinheit 20 ist mit einer Recheneinheit 22 versehen(Figur 2), die mittels einer Software zur Bilderkennung das von der Bilderfassungseinheit 18 erfasste Bild B auswertet. Hierzu werden Daten einer Datenbank DB herangezogen, in welcher Zuordnungen von vorgespeicherten Bilddaten BD zu Referenzgegenständen G (Figur 3), die sich potentiell in den Untersuchungsgegenständen 12 befinden und eine Gefahr darstellen oder umgekehrt unschädlichen Gegenständen entsprechen, gespeichert sind. Bei der Auswertung des Bildes B vergleicht die Recheneinheit 22 das Bild B mit den gespeicherten Bilddaten BD der Datenbank DB, wobei der Versuch der Erkennung eines der Referenzgegenstände G im Untersuchungsgegenstand 12 voll automatisch, d.h. ohne visuelle Auswertung durch einen Benutzer 24 und/oder ohne Eingabe von diesem Benutzer 24 erfolgt.

Die Datenbank DB ist in einer Speichereinheit 26 gespeichert, wobei die Auswerteeinheit 20 und zwar insbesondere deren Recheneinheit 22 in Wirkverbindung mit der Speichereinheit 26 steht. Alternativ oder zusätzlich kann die Datenbank DB auf einem vom Untersuchungsort entfernten, in der Figur nicht dargestellten Datenbankserver gespeichert sein, wobei die Auswerteeinheit 20 mittels einer Schnittstelle über ein Datennetzwerk Zugriff auf diesen Datenbankserver hat.

Die Ermittlungseinheit 17 weist ferner eine zweite Auswerteinheit 28 auf, die vom Benutzer 24 bedient wird. Diese Auswerteeinheit 28 ermöglicht eine visuelle Auswertung des Bilds B durch den Benutzer 24 und umfasst hierzu eine Anzeigeeinheit 30, die das Bild B dem Benutzer 24 anzeigt. Die Auswerteinheit 28 ist mit einer Recheneinheit 32 versehen, die dem Benutzer 24 ermöglicht, das Bild B zu bearbeiten, insbesondere das Bild B zu vergrößern und/oder aus dem Bild B einen verdächtigen Bereich zu extrahieren. Der Benutzer 24 trifft anhand vom Bild B eine Entscheidung über die weitere Behandlung des Untersuchungsgegenstands 12. Besteht kein Verdacht in Bezug auf den Untersuchungsgegenstand 12, wird dieser ohne weitere Prüfung weiter gefördert, wobei die Entscheidung einer "Freigabe" entspricht. Der Benutzer 24 kann ferner entscheiden, dass eine manuelle Untersuchung in einer Untersuchungsstation 34 vorzunehmen ist, wobei die Entscheidung einer "Nicht-Freigabe" entspricht. Hierbei wird der Untersuchungsgegenstand 12 aus dem Förderfluss entnommen und manuell untersucht. Die getroffene Entscheidung ("Freigabe" oder "Nicht-Freigabe") bzw. die diese Entscheidung motivierenden Gründe werden vom Benutzer 24 mittels einer Eingabeeinheit 36 als Auswertungseingabe 38 eingegeben.

Ferner kann der Benutzer 24 durch die visuelle Auswertung des Bildes B das Ergebnis der durch die automatisierte Auswerteeinheit 20 durchgeführten Auswertung des Bildes B bestätigen, wenn die visuelle Auswertung des Bildes B mit der automatischen Auswertung übereinstimmt, oder verwerfen, wenn keine Übereinstimmung zwischen beiden Auswertungen vorliegt. Diese Auswertungseingabe 38 dient dazu, einen Lernprozess der automatisierten Auswerteeinheit 20 zu ermöglichen. Die Untersuchungsvorrichtung 10 sieht eine bestimmte Hierarchie vor, durch welche eine Entscheidungsbefugnis der automatisierten Auswerteeinheit 20 über das Gefahrniveau und demnach die weitere Behandlung des Untersuchungsgegenstands 12 gegenüber der visuellen Auswerteeinheit 28 geregelt wird und die später unten näher spezifiziert wird. Durch die Berücksichtigung der vom Benutzer 24 eingegebenen Auswertungseingaben 38 kann die Anzahl der Fälle, in welchen die automatisierte Auswerteeinheit 20 automatisch eine Ermittlung des Gefahrniveaus durchführt, vorteilhaft steigen, um dadurch die Autonomie der Untersuchungsvorrichtung 10 zu erhöhen.

Figur 3 zeigt in einer schematisierten Ansicht die Datenbank DB. Diese weist Datenbankeinträge DB.1, DB.2, ..., DB.i usw. auf. Ein Datenbankeintrag, z.B. DB.1, entspricht im Wesentlichen der Zuordnung von Bilddaten, z.B. BD.1, jeweils zu einem Referenzgegenstand, im diesem Beispiel G.1, der einem bestimmten Gefahrenniveau entspricht. Mehrere Sätze von Bilddaten (z.B. BD.2, BD.3) können einem Referenzgegenstand (z.B. G2) zugeordnet sein. Die Bilddaten BD.i sind in einem Format gespeichert, das für eine Bilderkennung durch die Recheneinheit 22 der automatisierten Auswerteinheit 20 wie oben beschrieben geeignet ist. Insbesondere sind die Bilddaten BD.i in einem Vektorformat gespeichert.

Die Datenbankeinträge DB.i enthalten ferner jeweils einen Vertrauensparameter V.i, welcher die entsprechende Zuordnung der Bilddaten BD.i zu einem Referenzgegenstand G.j behaftet. In der Untersuchungsvorrichtung 10 ist ein Schwellwert des Vertrauensparameters V definiert, durch welchen die Entscheidungsbefugnis der automatisierten Auswerteeinheit 20 festgelegt wird. Der Schwellwert stellt eine Voraussetzung für eine automatische Ermittlung des Relevanzniveaus mittels der automatisierten Auswerteeinheit 20 dar:

Liegt für einen Datenbankeintrag DB.i der Vertrauensparameter V.i bei diesem Schwellwert oder oberhalb dieses Schwellwertes, ist die automatisierte Auswerteeinheit 20 bei der Erkennung eines Referenzgegenstands im Bild B befugt, selbst eine Entscheidung über den Untersuchungsgegenstand 12 zu treffen, d.h. das Gefahrniveau zu ermitteln, ohne dass das Bild B zur Auswertung durch den Benutzer 24 an die visuelle Auswerteinheit 28 weitergeleitet wird. Die automatisierte Auswerteeinheit 28 kann die Freigabe des Untersuchungsgegenstands 12 entscheiden, was der Ermittlung des niedrigsten Gefahrenniveaus entspricht, und/oder sie kann bei der Erkennung eines Gefahrgegenstands im Bild B automatisch die Gefahr signalisieren, was der Ermittelung eines höheren Gefahrenniveaus entspricht.

Liegt der Vertrauensparameter V einer identifizierten Verknüpfung mit einem Referenzgegenstand unterhalb des Schwellwertes oder konnte im Bild keine Übereinstimmung mit Bilddaten BD der Datenbank ermittelt werden, wird das Bild B an die Auswerteeinheit 28 zur visuellen Auswertung durch den Benutzer 24 weitergeleitet. Im ersten genannten Fall kann von der automatisierten Auswerteeinheit 20 das Gefahrenniveau nicht endgültig ermittelt werden, sondern es kann von der Auswerteeinheit 20 dem Benutzer 24 ein Verdacht mitgeteilt werden, dass sich ein bestimmter Referenzgegenstand im Untersuchungsgegenstand 12 befindet. Hierbei soll vom Benutzer 24 anhand der visuellen Auswerteeinheit 28 diesen Verdacht bestätigen oder nicht, wobei diese Information als Auswertungseingabe 38 berücksichtigt wird.

Die Datenbank DB kann mittels einer Datenbankverarbeitungseinheit 40 verarbeitet werden, die Bestandteil der Untersuchungsvorrichtung 10 ist. Diese ist in Figur 2 dargestellt.

Mittels der Datenbankverarbeitungseinheit 40, die in Wirkverbindung mit der Speichereinheit 26 (bzw. mit einem entfernten Datenbankserver über ein Datennetzwerk) steht, kann die Datenbank DB aktualisiert werden, indem neue Datenbankeinträge DB.i erzeugt werden und/oder bestehende Datenbankeinträge DB.i geändert bzw. ersetzt werden.

Die Datenbankverarbeitungseinheit 40 ist vorteilhaft dazu ausgelegt, Änderungen der Datenbank DB in Verbindung mit der Ermittlung des Gefahrenniveaus eines Untersuchungsgegenstands 12 vorzunehmen. Hierzu werden die Auswertungseingaben 38 des Benutzers 24 berücksichtigt, die aus der Ermittlung des Gefahrniveaus des aktuell untersuchten Untersuchungsgegenstands 12 hervorgehen. Die Datenbank DB wird demnach während des Untersuchungsbetriebs, d.h. während des üblichen, normalen Betriebs aktualisiert, wobei für die Verarbeitung eines Datenbankeintrags oder mehrerer Datenbankeinträge DB.i die vom Benutzer 24 eingegebenen Auswertungseingaben 38 registriert und berücksichtigt werden.

Eine Auswertungseingabe 38 des Benutzers 24 kann dazu dienen, einen neuen Datenbankeintrag DB.i zu erzeugen. Dies ist z.B. der Fall, wenn vom Benutzer 24 ein Objekt im Untersuchungsgegenstand 12 identifiziert wird, das in der Datenbank DB nicht enthalten ist. Der Benutzer 24 kann in seiner Auswertungseingabe 38 das Objekt definieren, d.h. als Referenzgegenstand G festlegen, und ihm ein Gefahrenniveau zuordnen. Hierzu kann vom Benutzer 24 ein Bereich 42 des Bildes B extrahiert werden (siehe Figur 2), der das Objekt darstellt, wobei dieser Bereich 42 als Auswertungseingabe 38 dient. Der vom Bild B extrahierte Bereich 42, der das Objekt darstellt, wird hierbei in der Form eines Satzes von Bilddaten BD mit dem neuen Referenzgegenstand G verknüpft, wobei diese Verknüpfung in einem neuen Datenbankeintrag gespeichert wird. Bei der Erzeugung eines neuen Datenbankeintrags wird der Vertrauensparameter V auf einen Minimalwert gesetzt.

Außerdem kann eine Auswertungseingabe 38 des Benutzers 24 dazu dienen, den Vertrauenswert V.i eines Datenbankeintrags DB.i zu ändern. Wie oben schon beschrieben, kann die automatisierte Auswerteeinheit 20 bei einem unterhalb des Schwellwerts liegenden Vertrauensparameter V.i einen Verdacht an die visuelle Auswerteeinheit 28 und dadurch an den Benutzer 24 mitteilen. Wird dieser Verdacht vom Benutzer 24 bestätigt, kann die Bestätigung als Auswertungseingabe 38 von der Datenbankverarbeitungseinheit 40 registriert werden, die dann den entsprechenden Vertrauenswert V.i um einen vorbestimmten Wert erhöht. Erreicht für diesen Datenbankeintrag DB.i der Vertrauenswert den Schwellwert, kann die automatisierte Auswerteeinheit 20 bei einer späteren Untersuchung selbst die Freigabe des Untersuchungsgegenstands 12 in Bezug auf den entsprechenden Referenzgegenstand oder das Signalisieren eines hohen Gefahrenniveaus entscheiden. Das Berücksichtigen der Auswertungseingabe 38 trägt demnach zu einem Lernprozess der automatisierten Auswerteeinheit 20 bei.

Die anhand der Zeichnungen beschriebene Untersuchungsvorrichtung 10 ist nicht auf die Untersuchung von Gepäckstücken eingeschränkt. Eine Anwendung des erfindungsgemäßen Konzepts in Verbindung mit der Untersuchung von Frachtcontainern oder von Passagieren ist ebenfalls denkbar. Die Untersuchungsvorrichtung ist in einer Anwendung auch nicht auf eine Benutzung in einer Flughafenanlage beschränkt. Sie eignet sich ebenfalls für eine Anwendung in weiteren Umgebungen, wie z.B. für eine Anwendung durch eine Zollbehörde, die die Einfuhr von gefährlichen und/oder verbotenen Waren überwacht.

## Patentansprüche

1. Untersuchungsvorrichtung zur Untersuchung eines als Person und/oder Behälter ausgebildeten Untersuchungsgegenstands (12), mit einer Ermittlungseinheit (17) zur Ermittlung eines dem Untersuchungsgegenstand (12) zuordenbaren Relevanzniveaus, insbesondere Gefahrniveaus, die eine Bilderfassungseinheit (18) zur Erfassung eines Bilds (B) des Untersuchungsgegenstands (12), eine Datenbank (DB), eine automatisierte Auswerteeinheit (20), die zur automatischen Auswertung von zumindest einem Abschnitt des Bilds (B) anhand der Datenbank (DB) vorgesehen ist, eine von einem Benutzer (24) bedienbare Auswerteeinheit (28) zur visuellen Auswertung von zumindest einem Abschnitt des Bilds (B) durch den Benutzer (24) und eine Eingabeeinheit (36) aufweist, die zum Eingeben zumindest einer Auswertungseingabe (38) durch den Benutzer (24) vorgesehen ist, und mit einer Datenbankverarbeitungseinheit (40) zur Verarbeitung der Datenbank (DB),
**dadurch gekennzeichnet,**
**dass** die Datenbankverarbeitungseinheit (40) dazu vorgesehen ist, in Verbindung mit der Ermittlung des Relevanzniveaus zumindest einen Datenbankeintrag (DB.i) anhand der Auswertungseingabe (38) zu verarbeiten.

2. Untersuchungsvorrichtung nach Anspruch 1, **gekennzeichnet durch** einen Untersuchungsbetrieb, in welchem eine Reihe von Untersuchungsgegenständen (12), die jeweils einen zumindest teilweise unbekannten Inhalt aufweisen, untersucht werden, wobei die Verarbeitung der Datenbank (DB) während des Untersuchungsbetriebs erfolgt.

3. Untersuchungsvorrichtung nach Anspruch 1 oder 2, **dadurch gekennzeichnet, dass** die Datenbankverarbeitungseinheit (40) dazu vorgesehen ist, anhand der Auswertungseingabe (38) einen Datenbankeintrag (DB.i) zu erzeugen.

4. Untersuchungsvorrichtung nach einem der vorhergehenden Ansprüche,
**dadurch gekennzeichnet, dass** der Datenbankeintrag (DB.i) Bilddaten (BD.i) enthält, die einem Referenzgegenstand (G.j) zugeordnet sind und in zumindest einem für ein Bilderkennungsverfahren geeigneten Format gespeichert sind.

5. Untersuchungsvorrichtung nach Anspruch 4,
**dadurch gekennzeichnet, dass** das Format einem Vektorformat entspricht.

6. Untersuchungsvorrichtung nach Anspruch 4 oder 5, **dadurch gekennzeichnet, dass** die Datenbankverarbeitungseinheit (40) dazu vorgesehen ist, die Bilddaten (BD.i) des Datenbankeintrags (DB.i) anhand von zumindest einem Bereich (42) des vom Benutzer (24) ausgewerteten Bilds (B) zu verarbeiten.

7. Untersuchungsvorrichtung nach einem der Ansprüche 4 bis 6,
**dadurch gekennzeichnet, dass** der Datenbankeintrag (DB.i) einen Vertrauensparameter (V.i) enthält, welcher die Zuordnung zum Referenzgegenstand (G.j) behaftet.

8. Untersuchungsvorrichtung nach Anspruch 7,
**dadurch gekennzeichnet, dass** ein Schwellwert des Vertrauensparameters (V.i) definiert ist, wobei der Schwellwert eine Voraussetzung für eine automatische Ermittlung des Relevanzniveaus mittels der automatisierten Auswerteeinheit (20) darstellt.

9. Untersuchungsvorrichtung nach Anspruch 8,
**dadurch gekennzeichnet, dass** die Datenbankverarbeitungseinheit (40) dazu vorgesehen ist, anhand der Auswertungseingabe (38) den Vertrauensparameter (V.i) zu ändern.

10. Verfahren zur Untersuchung eines als Person und/oder Behälter ausgebildeten Untersuchungsgegenstands (12), bei welchem zur Ermittlung eines dem Untersuchungsgegenstand (12) zuordenbaren Relevanzniveaus
- ein Bild (B) des Untersuchungsgegenstands (12) erfasst wird,
- eine automatische Auswertung von zumindest einem Abschnitt des Bilds (B) anhand einer Datenbank (DB) erfolgt,
- eine visuelle Auswertung von zumindest einem Abschnitt des Bilds (B) durch den Benutzer (24) erfolgt, wobei eine Auswertungseingabe (38) durch den Benutzer (24) eingegeben wird, und bei welchem die Datenbank (DB) verarbeitet wird,
**dadurch gekennzeichnet, dass**
zumindest ein Datenbankeintrag (DB.i) anhand der Auswertungseingabe (38)) in Verbindung mit der Ermittlung des Relevanzniveaus verarbeitet wird.
